# EUROPÄISCHE PATENTSCHRIFT

(11) **EP 2 838 944 B1**
(45) Veröffentlichungstag und Bekanntmachung des Hinweises auf die Patenterteilung: **25.07.2018**
(21) Anmeldenummer: 13711701.6
(22) Anmeldetag: 25.03.2013
(51) Int. Cl.: C09J 153/02, C09J 7/38, C08K 5/00

(54) **TEMPERATURSTABILE VERNETZBARE KLEBEMASSE MIT HART- UND WEICHBLÖCKEN**
TEMPERATURE STABLE, CURABLE ADHESIVES WITH HART AND SOFT BLOCKS
MATIÈRE ADHÉSIVE RÉTICULABLE THERMIQUEMENT STABLE COMPRENANT DES SEGMENTS DURS ET SOUPLES

(30) Priorität: 17.04.2012 DE 102012206265
(43) Veröffentlichungstag der Anmeldung: 25.02.2015
(73) Patentinhaber: tesa SE, 22848 Norderstedt (DE)
(72) Erfinder: KEITE-TELGENBÜSCHER, Klaus, 22529 Hamburg (DE); ELLINGER, Jan, 20257 Hamburg (DE); GRÜNAUER, Judith, 22117 Hamburg (DE); KRAWINKEL, Thorsten, 22457 Hamburg (DE)
(86) Internationale Anmeldenummer: PCT/EP2013/056277
(87) Internationale Veröffentlichungsnummer: WO 2013/156267

(56) Entgegenhaltungen:
- EP-A2- 1 857 515

## Beschreibung

Die vorliegende Erfindung betrifft eine Klebemasse, insbesondere temperaturstabile Klebemasse mit erhöhter Kohäsion bei gleichzeitig hoher Klebkraft, umfassend (i) Blockcopolymere sowie Mischungen dieser mit einem Aufbau A-B-A, (A-B)ₙ, (A-B)ₙX oder (A-B-A)ₙX, wobei X der Rest eines Kopplungsreagenzes ist, n eine ganze Zahl zwischen 2 und 10, A ein Polymerblock aus einem Vinylaromaten und B ein Polymerblock aus einem Alken oder Dien, wobei dieser Polymerblock zumindest teilweise hydriert sein kann mit der Bedingung, dass zumindest ein Teil der A-Blöcke sulfoniert ist, optional als Zumischkomponente Zweiblockcopolymere der Form A-B und (ii) mindestens ein Klebharz und (iii) mindestens einen Metallkomplex mit einem substituierbaren Komplexbildner.

Als Haftklebemassen werden Klebemassen bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen und die Wiederablösbarkeit beruht auf ihren adhäsiven Eigenschaften und auf ihren kohäsiven Eigenschaften. Als Basis für Haftklebemassen kommen verschiedene Verbindungen in Frage.

Klebebänder, die mit Haftklebemassen ausgerüstet sind, so genannte Haftklebebänder, werden heute im industriellen und privaten Bereich in vielfältiger Weise verwendet. Üblicherweise bestehen Haftklebeänder aus einer Trägerfolie, die ein- oder beidseitig mit einer Haftklebmasse ausgerüstet ist. Es gibt auch Haftklebebänder, die ausschließlich aus einer Haftklebmasseschicht und keiner Trägerfolie bestehen, die so genannten Transfer-Tapes. Die Zusammensetzung der Haftklebebänder kann sehr unterschiedlich sein und richtet sich nach den jeweiligen Anforderungen der unterschiedlichen Anwendungen. Die Träger bestehen üblicherweise aus Kunststofffolien wie zum Beispiel Polypropylen, Polyethylen, Polyester oder auch aus Papier, Gewebe oder Vliesstoff. Die Selbst- beziehungsweise Haftklebemassen basieren zumeist auf Acrylat-Copolymeren, Silikonen, Naturkautschuk, Synthesekautschuk, Styrolblockcopolymeren oder Polyurethanen.

Es besteht ein Bedarf an Klebebändern, die eine sehr hohe Verklebungsfestigkeit aufweisen, aber auch bei erhöhten Temperaturen ihre Kohäsion nicht verlieren. Insbesondere bei Verklebungen im Außenbereich oder in Automobilen können Temperaturen von über 60 °C bis 70 °C auftreten. Für Klebebänder mit besonders hohen Halteleistungen insbesondere im Konsumerbereich werden häufig Klebmassen auf Basis von Styrolblockcopolymeren eingesetzt. Diese haben den Vorteil, dass sie eine sehr hohe Verklebungsfestigkeit aufweisen können bei gleichzeitig sehr hoher Kohäsion. Durch eine hohe Anfassklebrigkeit sind auch Verklebungen auf rauen Untergründen sicher möglich.

Typischerweise finden lineare oder radiale Blockcopolymere auf Basis von Polystyrolblöcken und Polybutadienblöcken und/oder Polyisoprenblöcken Verwendung, also zum Beispiel radiale Styrol-Butadien-(SB)ₙ und/oder lineare Styrol-Butadien-Styrol (SBS)- und/oder lineare Styrol-Isopren-Styrol (SIS)-Blockcopolymere.

Die im Markt befindlichen Produkte mit Haftklebemassen auf Basis von Styrolblockcopolymeren zeigen Schwächen bei der Verklebungsfestigkeit bei Temperaturen oberhalb von 50 °C. Durch ein Erweichen der vornehmlich aus Polystyrol bestehenden Hartphasen (Blockpolystyroldomänen) kommt es insbesondere bei der Verklebung von mittelschweren Gegenständen zum kohäsiven Versagen der Haftklebestreifen.

Ein Versagen der Verklebung tritt besonders bei einer Kippscherbelastung (bei der ein Drehmoment wirksam ist, wie zum Beispiel bei der Verklebung eines Hakens) deutlich stärker auf, als bei einer reinen Scherbelastung.

Die EP 1 857 515 A2 betrifft die Verwendung eines Klebebands zur Maskierung von insbesondere mit kathodischem Tauchlack (KTL) überzogenen Untergründen, weiter bevorzugt von Fensterflanschen, mit einem ein- oder mehrschichtigen Träger und einer einseitig darauf aufgebrachten Selbstklebemasse enthaltend mit Metallchelaten vernetzbare Vinylaromatenblockcopolymere, bevorzugt Styrolblockcopolymere, die zumindest mit einem oder mehreren Klebharzen abgemischt sind, wobei die Vinylaromatenblockcopolymere zumindest teilweise säure- oder säureanhydridmodifiziert sind.

Aufgabe der Erfindung ist es, eine Klebemasse zur Verfügung zu stellen, die eine ausgezeichnete Temperaturstabilität aufweist. Insbesondere soll die Klebemasse eine Haftklebemasse sein, die über einen weiten Temperaturbereich haftklebrig ist, insbesondere soll die Klebemasse für temperaturstabile Klebebänder geeignet sein. Weiter besteht die Aufgabe, eine Klebemasse zu entwickeln, die bei hoher Temperatur eine gute Verklebefestigkeit aufweist. Ferner besteht die Aufgabe, eine Klebemasse zu entwickeln, die verschiedene Artikel dauerhaft miteinander verbinden kann, die eine gute Performance bei hohen Temperaturen hat, insbesondere eine gute Verklebefestigkeit bei hohen Temperaturen hat, vorzugweise oberhalb 100 °C, und die gut handhabbar in Verklebungsprozessen ist, die eine flexible und saubere Verarbeitung erlaubt und die trotzdem beim Hersteller einfach zu verarbeiten ist.

Gelöst wird diese Aufgabe durch eine Klebemasse, wie sie im Hauptanspruch näher gekennzeichnet ist. In den Unteransprüchen sind vorteilhafte Ausführungsformen der Erfindung beschrieben. Ferner wird die Aufgabe gelöst durch eine Klebemasse, die gemäß dem erfindungsgemäßen Verfahren erhalten wird, sowie durch das erfindungsgemäße Verfahren zur Herstellung der Klebemasse selbst. Des Weiteren werden die Aufgaben durch die in den Ansprüchen genannte Verwendung der erfindungsgemäßen Klebemasse gelöst.

Es war aus vorgenannten Gründen überraschend, dass mit der erfindungsgemäßen, zumindest teilweise sulfonierten Klebemasse ausgezeichnete Verklebefestigkeiten, insbesondere auch von Klebebändern, erzielt werden können und die Klebemasse zugleich eine hervorragende Temperaturbeständigkeit aufweist.

Gegenstand der Erfindung sind Klebemassen, vorzugsweise Haftklebemassen, insbesondere temperaturstabile Klebemassen umfassend (i) Blockcopolymere sowie Mischungen dieser mit einem Aufbau A-B-A, (A-B)ₙ, (A-B)ₙX oder (A-B-A)ₙX, wobei X der Rest eines Kopplungsreagenzes ist, n eine ganze Zahl zwischen 2 und 10, insbesondere kann n jeweils unabhängig ausgewählt sein aus 2, 3, 4, 5, 6, 7, 8, 9 und 10, A ein Polymerblock aus einem Vinylaromaten und B ein Polymerblock aus einem Alken oder Dien ist, wobei dieser Polymerblock B vorzugsweise zumindest teilweise, bevorzugt vollständig hydriert sein kann und zumindest ein Teil der A-Blöcke sulfoniert ist, optional als Zumischkomponente Zweiblockcopolymere der Form A-B und (ii) mindestens ein Klebharz und (iii) mindestens einen Metallkomplex mit einem substituierbaren Komplexbildner.

Die erfindungsgemäße Klebemasse ist eine vernetzbare Klebemasse, insbesondere eine koordinativ vernetzbare Klebemasse, vorzugsweise basierend auf sulfonierten Vinylaromatenblockcopolymeren mit guter Verarbeitbarkeit und Beschichtbarkeit. Weiter zeichnen sie sich durch gute Produkteigenschaften in Bezug auf Adhäsion und Kohäsion aus und zeigen hervorragende Verklebungsfestigkeiten selbst bei hohen Temperaturen. Aufgrund der Vernetzung lässt sich die hohe Temperaturbeständigkeit in der Klebemasse einstellen.

Blockcopolymere mit weichen und harten Komponenten, deren T_{g} deutlich divergieren, bilden in der Regel bei Raumtemperatur eine Domänenstruktur, die für permeationshemmende Eigenschaften bei Klebemassen angestrebt wird. Die unmodifizierten Blockcopolymere von Styrol-Blöcken und Dien/Butylen/Isobutylen/Ethylen/Propylen-Blöcken sind meist nur bis 85 oder bis 100 °C scherstabil, in diesem Temperaturbereich beginnen sich die Domänenstrukturen aufzulösen.

Erfindungsgemäß wurde gefunden, dass die Modifizierung, insbesondere Sulfonierung der Hart-Blöcke der Blockcopolymere, vorzugsweise der Aromaten der Alkenfunktionalisierten Aromaten wie Vinylaromaten, weiterhin ein gutes Auffließen im unvernetzten Zustand erlaubt. Aufgrund der Sulfonierung können bereits ohne Vernetzung leicht verbesserte Schereigenschaften gegenüber den unmodifizierten Blockcopolymeren beobachtet werden. Eine anschließende Vernetzung der SulfonsäureGruppen oder Sulfonsäure-Derivate wie Ester über eine koordinative Vernetzung mit einem Metall, vorzugsweise mit Aluminium eines Aluminiumchelats, führt zu einer deutlichen Verbesserung der Schereigenschaften der vernetzen Klebemassen. Je nach späterer Anwendung wird das Metall im Metallchelat gewählt, um eine unerwünschte Verunreinigung mit Metallen in empfindlichen Anwendungen zu vermeiden.

Bevorzugt ist zumindest ein Teil der A-Blöcke der (i) Blockcopolymere sulfoniert, diese Blockcopolymere werden auch als sulfoniertes Copolymer bezeichnet. In den sulfonierten Blockcopolymeren ist zumindest ein Teil der Polymerblöcke A am Aromaten sulfoniert. Somit umfasst die Klebemasse ein Blockcopolymer oder ein Gemisch mit Blöcken umfassend sulfonierte A-Blöcke und unsulfonierte Blöcke B, insbesondere mit vernetzten sulfonierten A-Blöcken, besonders bevorzugt vernetzt über Metalle, insbesondere gemäß Metallchelate der allgemeinen Formel I. Ferner liegen vorzugsweise zusätzlich Blockcopolymere als unsulfonierte Copolymere vor, die jeweils unabhängig A-Blöcke und B-Blöcke aufweisen. Zusätzlich können als Zumischkomponente der Form A-B auch unabhängig Blöcke als A'-Blöcke und B'-Blöcken in der Klebemasse vorliegen.

Übliche Kopplungsreagenzien zur Herstellung von Zwei-, Drei- sowie Multi- und Sternblockcopolymeren sind dem Fachmann bekannt. Um nur einige zu nennen, werden beispielhaft 2-Vinylpyridin, 1,4-Di(brommethyl)benzol, Dichlordimethylsilan oder 1,2-Bis(trichlorsilyl)ethan genannt, ohne die Kopplungsreagenzien darauf zu beschränken. Von diesen Kopplungsreagenzien verbleibt nach der Kopplung X als Rest.

Gegenstand der Erfindung sind zudem Klebemassen, deren Blöcke unterschiedliche T_{g}s (bestimmbar über DSC) aufweisen, und durch eine Unlöslichkeit der einzelnen Phasen ineinander eine Ausbildung von Domänen ermöglichen. Durch die Bildung dieser Domänen innerhalb eines Blockcopolymers können eine sehr gute Kohäsion bei Raumtemperatur erreicht werden. Daher ist es bevorzugt, wenn in dem Copolymer (i) die A-Blöcke jeweils unabhängig einen T_{g} größer 40 °C und die B-Blöcke jeweils unabhängig einen T_{g} kleiner 0 °C aufweisen. Vorzugsweise weisen die A-Blöcke bereits vor der Sulfonierung einen T_{g} größer 40 °C auf.

Bevorzugte Klebemassen zeichnen sich weiter dadurch aus, dass in dem Blockcopolymer die polymeren A-Blöcke unabhängig ein Homo- oder Copolymer sind, die gebildet wurden aus Vinylaromaten wie Styrol, oder Styrol-Derivaten und/oder α-Methylstyrol, o-, p-Methylstyrol, 2,5-Dimethylstyrol, p-Methoxystyrol und/oder tert.-Butylstyrol.

Um die erfindungsgemäßen hohen Temperaturstabilitäten einzustellen, wird ein gewisser Grad an Sulfonierung der Copolymere angestrebt. Bevorzugte Klebemassen zeichnen sich durch einen definierten Gehalt an sulfonierten Aromaten aus, das heißt einen Gehalt an polymerisierten und sulfonierten Vinylaromaten. Bevorzugt weist das sulfonierte Copolymer sulfonierte polymere A-Blöcke auf, deren Aromaten größer gleich 0,5 Mol-% je Mol der Monomereinheit, das heißt der Vinylaromaten, bezogen auf die Gesamtmonomereneinheiten der A-Blöcke der sulfonierten Copolymere sulfoniert sind, insbesondere größer gleich 4 Mol-% bis 50 Mol-%, bevorzugt zwischen 0,5 bis 50 Mol-%, vorzugsweise 2 bis 40 Mol-%, bevorzugt 5 bis 30 Mol-%, besonders bevorzugt 10 bis 25 Mol-%, erfindungsgemäß 12 bis 17 Mol-%, alternativ um 15 Mol-% mit einer Schwankungsbreite von plus/minus 2 Mol-%, vorzugsweise 1 Mol-%. Bei Werten im Bereich von 10 bis 25 Mol-%, vorzugsweise von 12 bis 17 Mol-% kann eine besonders gute Vernetzung erzielt werden, um eine hohe Temperaturstabilität zu erreichen, ohne dass die Klebemasse an Klebkraft verliert. Die Sulfonierung erfolgt vorzugsweise nur am Aromaten der A-Blöcke.

Ferner umfasst die Klebemasse vorzugsweise unabhängig unsulfonierte Blockcopolymere und gegebenenfalls mindestens eine Zumischkomponente, deren A-Blöcke ebenfalls aus Vinylaromaten abgeleitet sind wie Styrol. Die B-Blöcke (Weichblock) dieser Copolymeren sind unabhängig Polymere abgeleitet aus Isopren, Butadien, Isobutylen, Ethylen und/oder Propylen und sind vorzugsweise im Wesentlichen vollständig hydriert.

Weiter ist Gegenstand der Erfindung eine Klebemasse, die umfasst (ii) zu 10 bis 60 Gew.-% mindestens ein Klebharz, vorzugsweise 20 bis 55 Gew.-%, insbesondere ein Kohlenwasserstoffharz, wie ein teil- oder vollständig hydriertes Kohlenwasserstoffharz vorzugsweise zu größer gleich 30 bis 60 Gew.-%, und (iii) mindestens ein Metallkomplex mit einem substituierbaren Komplexbildner, insbesondere der Formel I, und optional (iv) bis zu 20 Gew.-% einen Weichmacher, insbesondere 5 bis 15 Gew.-%, und (v) 0,0 bis 20 Gew.-%, insbesondere 0,0 bis 10,0 Gew.-%, vorzugsweise jeweils 0,0 bis 5 Gew.-% Füllstoffe, Additive, und (i) das Blockcopolymer und oder Mischungen von Copolymeren ad 100 Gew.-% in der Gesamtzusammensetzung der Klebemasse, vorzugsweise liegt das Copolymer zu größer gleich 30 bis 80 Gew.-% in der Klebemasse vor, besonders bevorzugt zu 30 bis 60 Gew.-%, vorzugsweise 30 bis 50 Gew.-%. Dabei ist es bevorzugt, wenn die polymeren A-Blöcke und optional A'-Blöcke und die polymeren B-Blöcke und optional B'-Blöcke jeweils als Domänen vorliegen.

Als (Haft)klebemassen finden bevorzugt solche auf Basis von Blockcopolymeren enthaltend Polymerblöcke überwiegend gebildet durch Polymerisation von Vinylaromaten (A-Blöcke), bevorzugt Styrol, und solche überwiegend gebildet durch Polymerisation von Alkenen oder 1,3-Dienen (B-Blöcke) wie zum Beispiel Ethylen, Propylen, Butadien, Isobutylen und Isopren oder einem Copolymer aus Butadien und Isopren Anwendung. Dabei können die Produkte auch teilweise oder vollständig im Alken-Block oder Dien-Block hydriert sein. Besonders bevorzugt sind Blockcopolymere von Polystyrol und zumindest teilhydriertem Polybutadien beziehungsweise aus Polystyrol und Polyisobutylen.

Die aus den A-Blöcken und B-Blöcken resultierenden Blockcopolymere können jeweils unabhängig gleiche oder unterschiedliche A- als auch unterschiedliche B-Blöcke enthalten. Beispielsweise können die Blockcopolymere lineare A-B-A-Strukturen aufweisen. Einsetzbar sind ebenfalls Blockcopolymere von radialer Gestalt sowie sternförmige und lineare Multiblockcopolymere wie Triblockpolymere oder höhere Blockpolymere. Als weitere Komponenten können A-B-Zweiblockcopolymere (Diblockcopolymere) vorhanden sein. Sämtliche der vorgenannten Polymere können alleine oder im Gemisch miteinander eingesetzt werden.

Anstelle der bevorzugten Polystyrolblöcke als A-Block, A'-Block können als Vinylaromaten auch Polymerblöcke auf Basis anderer aromatenhaltiger Homo- und Copolymere (bevorzugt C₈- bis C₁₂-Aromaten) mit Glasübergangstemperaturen von über 75 °C verwendet werden wie zum Beispiel α-methylstyrolhaltige Aromatenblöcke. Weiterhin können auch gleiche oder unterschiedliche A-Blöcke enthalten sein.

Kommerziell sind hydrierte Vinylaromatenblockcopolymere zum Beispiel unter dem Namen Kraton der Firma Kraton als Styrol-Ethylen/Butylen-Styrol-Blockcopolymere oder unter dem Namen Septon der Firma Kuraray als Styrol-Ethylen/Propylen-Styrol-Blockcopolymere bekannt.

In einer vorteilhaften Ausführungsform weisen die Copolymere, insbesondere Blockcopolymere, einen Polyvinylaromatanteil von 10 Gew.-% bis 35 Gew.-% auf. Dies gilt sowohl für die sulfonierten Copolymere als auch unabhängig davon für die unsulfonierten Copolymere.

Wenigstens ein Teil der eingesetzten Copolymere, vorzugsweise Blockcopolymere, ist dabei im Vinylaromatenteil sulfoniert, insbesondere mit Sulfonsäure oder einem Sulfonsäurederivat, vorzugsweise einem Ester. Die Sulfonierung der Aromaten der A-Blöcke, kann dabei auf verschiedenen Wegen realisiert werden. Möglich ist beispielweise eine direkte Sulfonierung mit konzentrierter Schwefelsäure oder eine Chlorsulfonierung mit Sulfurylchlorid und anschliessender Verseifung der Chlorsulfonsäure. Sehr einfach und elegant ist die Umsetzung mit in situ hergestelltem Acetyl- oder Isopropylsulfat.

In einer weiteren bevorzugten Ausgestaltung beträgt der Anteil der polymeren A-Blöcke in den Blockcopolymeren mindestens 13 Gew.-% in Bezug auf Gesamtmasse der Blockcopolymere. In einer alternativen bevorzugten Ausführungsform beträgt der Anteil der Copolymere, vorzugsweise der Blockcopolymere, wie der Vinylaromatenblockcopolymere in Summe bezogen auf die gesamte (Haft)klebemasse mindestens 20 Gew.-%, vorzugsweise mindestens 30 Gew.-%, weiter bevorzugt mindestens 35 Gew.-%. Ein zu geringer Anteil an Vinylaromatenblockcopolymeren hat zur Folge, dass die Kohäsion der Haftklebemasse relativ niedrig ist. Der maximale Anteil der Vinylaromatenblockcopolymere in Summe bezogen auf die gesamte Haftklebemasse beträgt maximal 80 Gew.-%, bevorzugt maximal 65 Gew.-%, ganz besonders bevorzugt maximal 60 Gew.-%. Ein zu hoher Anteil an Vinylaromatenblockcopolymere hat wiederum zur Folge, dass die Haftklebemasse kaum noch haftklebrig ist.

Aufgrund der Chelatvernetzung und des Anteils an Hartblöcken weisen die erfindungsgemäßen Klebemassen sehr gute Shear Adhesion Failure Temperature Werte (SAFT) auf. So können für die erfindungsgemäßen Klebemassen SAFT-Werte von größer gleich 150 °C erreicht werden, insbesondere größer gleich 180 °C, bevorzugt größer gleich 200 °C, besonders bevorzugt größer gbich 210 °C, bis vorzugsweise mindestens 250 °C, in Abhängigkeit von der Vernetzung und dem Anteil an Hartblöcken.

Bevorzugte Klebemassen weisen daher einen Anteil in Gew.-% der Vinylaromaten der polymeren A-Blöcke und A'-Blöcke im (i) Blockcopolymer in Bezug auf die Gesamtzusammensetzung der Klebemasse von mindestens 13 bis 85 Gew.-% auf, vorzugsweise 20 bis 80 Gew.-%, besonders bevorzugt zwischen größer gleich 30 bis kleiner gleich 60 Gew.-%. Der Gehalt darf nicht zu hoch sein, um eine ausreichende Haftklebrigkeit zu gewährleisten.

Bevorzugte B- und B'-Blöcke umfassen unabhängig Homo- oder Copolymere aus monomeren Alkenen mit 2 bis 8 C-Atomen, vorzugsweise sind die Monomere ausgewählt aus Ethylen, Propylen, 1,3-Dienen, besonders vorzugsweise aus Butadien, Isobuten und/oder Isopren. Dabei ist es für den erfindungsgemäßen Erfolg besonders bevorzugt, wenn die polymeren B- und B'-Blöcke zumindest teilweise hydriert, insbesondere im Wesentlichen vollständig hydriert sind. Eine vorzugsweise vollständige Hydrierung der B-Blöcke verhindert eine Sulfonierung der B-Blöcke, so dass eine Klebemasse mit guter Transparenz hergestellt werden kann. Als unpolare Comonomere der Copolymer-B-Blöcke sind beispielsweise (teil-)hydriertes Polybutadien, (teil-) hydriertes Polyisopren und/oder Polyolefine geeignet.

Als mindestens ein Metallkomplex mit substituierbarem Komplexbildner wird vorzugsweise als Metallkomplex ein Metallchelat der Formel I verwendet,

(R¹O)ₙ M (XR²Y)ₘ (I)

- wobei M ein Metall ist, ausgewählt aus Metallen der 2. 3. 4. und 5. Hauptgruppe des Periodensystems und den Übergangsmetallen, insbesondere ist M ausgewählt aus Aluminium, Zinn, Titan, Zirkonium, Hafnium, Vanadium, Niob, Chrom, Mangan, Eisen, Kobalt, und Cer, wobei M besonders bevorzugt Aluminium oder Titan ist, und
- R¹ eine Alkyl- oder Aryl-Gruppe ist, insbesondere mit 1 bis 12 C-Atomen, wie Methyl, Ethyl, Butyl, Isopropyl oder Benzyl;
- n gleich 0 oder eine größere ganze Zahl ist, insbesondere 0, 1, 2, 3 oder 4, bevorzugt ist n 0 oder 1,
- X und Y im Chelat-Ligand (XR²Y) unabhängig Sauerstoff oder Stickstoff sind, die optional mit einer Doppelbindung an R² gebunden sind, bevorzugte Chelatliganden sind Dione, wie 2,4-Pentandion,
- R² eine X und Y verbindende Alkylen-Gruppe ist, insbesondere eine bifunktionelle Alkylen-Gruppe, die linear oder verzweigt ist und optional mit Heteroatom(en) in der Alkylen-Gruppe, insbesondere Sauerstoff, Stickstoff oder Schwefel;
- m eine ganze Zahl ist, mindestens jedoch 1, insbesondere eine Zahl ausgewählt aus 1, 2 oder 3. In bevorzugten Metallchelaten ist M ausgewählt aus Aluminium, Titan und Zirkon, wobei n gleich 0, 1, 2 oder 3 ist und m gleich 1, 2, 3 oder 4.

Bevorzugte Chelatliganden sind solche, die aus der Reaktion folgender Verbindungen entstanden sind: Triethanolamin, 2,4-Pentandion, 2-Ethyl-1,3-Hexandiol oder Milchsäure. Besonders bevorzugte Vernetzer sind Aluminium- und Titanylacetylacetonate. Wie Tris(acetylacetonato)-aluminium, Bis(acetylacetonato)-titan(IV)-oxid, Bis(pentan-2,4-dionato)-titan(IV)-oxid.

Dabei sollte ein annähernd äquivalentes Verhältnis zwischen den Sulfonsäure-/ Sulfonsäurederivat-Gruppen und den Acetylacetonat-Gruppen gewählt werden, um eine optimale Vernetzung zu erreichen, wobei sich ein kleiner Überschuss an Vernetzer als positiv herausgestellt hat. Das Verhältnis zwischen Sulfonsäure- oder Sulfonsäurederivat-Gruppen und Acetylacetonat-Gruppen kann aber variiert werden, dabei sollte für eine ausreichende Vernetzung keine der beiden Gruppen in mehr als einem fünffachen molaren Überschuss vorliegen. Gegenstand der Erfindung ist vorzugsweise eine Klebemasse in der das molare Verhältnis der Sulfonsäuregruppen im (i) sulfonierten Copolymer zum Liganden (XR²Y), insbesondere zu einem Acetylacetonat-Liganden; im (iii) Metallkomplex der Formel I im Bereich von 1 : 5 bis 5 : 1 einschließlich der Grenzwerte liegt, insbesondere im Bereich von 1 : 3 bis 3 : 1, insbesondere 1 : 2 bis 2 : 1, vorzugsweise um 1 : 1 mit einer Schwankungsbreite von plus/minus 0,5, insbesondere 0,2.

In weiter bevorzugter Ausgestaltung weist die Haftklebemasse neben dem mindestens einen Vinylaromatenblockcopolymer mindestens ein Klebharz auf, um die Adhäsion in gewünschter Weise zu erhöhen. Das Klebharz sollte mit dem Elastomerblock der Blockcopolymere verträglich sein.

Als Klebharze (Klebrigmacher) können in der Haftklebemasse zum Beispiel nicht hydrierte, partiell oder vollständig hydrierte Harze auf Basis von Kolophonium und Kolophoniumderivaten, hydrierte Polymerisate des Dicyclopentadiens, nicht hydrierte, partiell, selektiv oder vollständig hydrierte Kohlenwasserstoffharze auf Basis von C₅-, C₅/C₉- oder Cg-Monomerströmen, Polyterpenharze auf Basis von α-Pinen und/oder β-Pinen und/oder δ-Limonen, hydrierte Polymerisate von bevorzugt reinen C₈- und Cg-Aromaten eingesetzt werden. Vorgenannte Klebharze können sowohl allein als auch im Gemisch eingesetzt werden. Dabei können sowohl bei Raumtemperatur feste als auch flüssige Harze zum Einsatz kommen.

Als weitere Additive können typischerweise genutzt werden:
- Plastifizierungsmittel wie zum Beispiel Weichmacheröle oder niedermolekulare flüssige Polymere wie zum Beispiel niedermolekulare Polybutene
- primäre Antioxidantien wie zum Beispiel sterisch gehinderte Phenole
- sekundäre Antioxidantien wie zum Beispiel Phosphite oder Thioether
- Prozessstabilisatoren wie zum Beispiel C-Radikalfänger
- Lichtschutzmittel wie zum Beispiel UV-Absorber oder sterisch gehinderte Amine
- Verarbeitungshilfsmittel
- Endblockverstärkerharze sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine.

In einer Ausführungsform der vorliegenden Erfindung enthält die Haftklebemasse auch Füllstoffe, beispielhaft aber nicht einschränkend erwähnt seien Metalloxide, Metallhydroxide, Carbonate, Nitride, Halogenide, Carbide oder gemischte Oxid-/ Hydroxid-/Halogenidverbindungen der Metalle ausgewählt aus Aluminium, Silicium, Zirkonium, Titan, Zinn, Zink, Eisen oder der (Erd)alkalimetalle. Hierbei handelt es sich im Wesentlichen um Tonerden zum Beispiel Aluminiumoxide, Boehmit, Bayerit, Gibbsit, Diaspor und ähnliche. Ganz besonders geeignet sind Schichtsilicate wie beispielsweise Bentonit, Montmorillonit, Hydrotalcit, Hectorit, Kaolinit, Boehmit, Glimmer, Vermiculit oder deren Mischungen. Aber auch Ruße oder weitere Modifikationen des Kohlenstoffs, etwa Kohlenstoffnanoröhrchen können verwendet werden. Die Füllstoffe sind nicht zwingend, die Klebemasse funktioniert auch, ohne dass diese einzeln oder in beliebiger Kombination zugesetzt sind.
Der Anteil beträgt vorzugsweise mindestens 5 Gew.-%, weiter bevorzugt mindestens 10 Gew.-% und ganz bevorzugt mindestens 15 Gew.-%.
Gemäß einer bevorzugten Ausführungsform der Erfindung überschreitet der Anteil an Füllstoffen nicht einen Wert von 30 Gew.-%, um den Einfluss auf die Klebeeigenschaften möglichst gering zu halten.

Im Bereich der Klebstoffe zeichnen sich Haftklebemassen insbesondere durch ihre permanente Klebrigkeit und Flexibilität aus. Ein Material, das permanente Haftklebrigkeit aufweist, muss zu jedem Zeitpunkt eine geeignete Kombination aus adhäsiven und kohäsiven Eigenschaften aufweisen. Für gute Haftungseigenschaften gilt es, Haftklebemassen so einzustellen, dass eine optimale Balance aus adhäsiven und kohäsiven Eigenschaften besteht.

Vorzugsweise ist die Klebemasse eine Haftklebemasse, also eine viskoelastische Masse, die bei Raumtemperatur in trockenem Zustand permanent klebrig und klebfähig bleibt. Die Klebung erfolgt durch leichten Anpressdruck sofort auf fast allen Substraten. Das oder die Copolymere sind gemäß einer bevorzugten Ausführungsform der Erfindung statistische, alternierende, Block-, Stern- und/oder Pfropfcopolymere mit einer Molmasse M_{w} (Gewichtsmittel) von 300.000 g/mol oder kleiner, bevorzugt 200.000 g/mol oder kleiner. Kleinere Molgewichte sind dabei aufgrund ihrer besseren Verarbeitbarkeit bevorzugt.

Es ist vorteilhaft, wenn es sich bei dem zumindest einen Blockcopolymer um ein Triblockcopolymer handelt, das aus zwei endständigen Hartblöcken und einem mittelständigen Weichblock aufgebaut ist. Diblockcopolymere sind ebenfalls gut geeignet wie auch Gemische aus Tri- und Diblockcopolymeren.

Die Herstellung und Verarbeitung der Haftklebemasse kann aus Lösung, Dispersion sowie aus der Schmelze erfolgen. Bevorzugt erfolgt die Herstellung und Verarbeitung aus Lösung oder aus der Schmelze. Besonders bevorzugt ist die Fertigung der Klebemasse aus Lösung.

Ebenfalls Gegenstand der Erfindung sind flächige Haftmittel umfassend die erfindungsgemäße Klebemasse, wobei das flächige Haftmittel ausgewählt ist aus einem Flächenelement der Klebemasse, insbesondere als Transferklebeband, vorzugsweise in Form eines Flächenelements der Klebemasse mit einer zumindest das Flächenelement teilweise bedeckenden Schicht, und wobei die Klebemasse im Wesentlichen getrocknet ist. Ferner kann das flächige Haftmittel, insbesondere ein Flächenelement der Klebemasse ein Klebeband sein, wobei das Klebeband einen Träger, insbesondere einen flächigen Träger, aufweist und mindestens auf einer Seite des Trägers die aufgebrachte Klebemasse aufweist, und die Klebemasse im Wesentlichen getrocknet ist. Das genannte Klebeband kann ein- oder doppelseitig klebendes Klebeband sein. Üblicherweise weisen Transferklebebänder zur einfacheren Herstellung, Lagerung und Verarbeitung ein Trennpapier auf. Besonders vorteilhaft lässt sich die erfindungsgemäße Klebemasse in einem ein- oder doppelseitig klebenden Klebeband verwenden. Diese Darreichungsart erlaubt eine besonders einfache und gleichmäßige Applikation der Klebemasse.

Der allgemeine Ausdruck "Klebeband" umfasst dabei ein Trägermaterial, welches ein- oder beidseitig mit einer (Haft)klebemasse versehen ist. Das Trägermaterial umfasst alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge (beispielsweise in Form von Umrandungen oder Begrenzungen einer (opto-)elektronischen Anordnung), Mehrschichtanordnungen und dergleichen. Dabei sind für verschiedene Anwendungen unterschiedlichste Träger wie zum Beispiel Folien, Gewebe, Vliese und Papiere mit den Klebemassen kombinierbar. Des Weiteren umfasst der Ausdruck "Klebeband" auch so genannte "Transferklebebänder", das heißt ein Klebeband ohne Träger. Bei einem Transferklebeband ist die Klebemasse vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, die Klebemasse appliziert und dann der zweite Liner entfernt.

Es sind aber auch Klebebänder möglich, bei denen nicht mit zwei Linern, sondern mit einem einzigen doppelseitig trennend ausgerüsteten Liner gearbeitet wird. Die Klebebandbahn ist dann an ihrer Oberseite mit der einen Seite eines doppelseitig trennend ausgerüsteten Liners abgedeckt, ihre Unterseite mit der Rückseite des doppelseitig trennend ausgerüsteten Liners, insbesondere einer benachbarten Windung auf einem Ballen oder einer Rolle.

Als Trägermaterial eines Klebebandes werden vorliegend bevorzugt Polymerfolien, Folienverbunde, Vliese, Gewebe, Papiere, Schäume oder mit organischen und/oder anorganischen Schichten versehene Folien oder Folienverbunde eingesetzt. Derartige Folien/Folienverbunde können aus allen gängigen zur Folienherstellung verwendeten Kunststoffen bestehen, beispielhaft aber nicht einschränkend erwähnt seien:
Polyethylen, Polypropylen - insbesondere das durch mono- oder biaxiale Streckung erzeugte orientierte Polypropylen (OPP), Cyclische Olefin Copolymere (COC), Polyvinylchlorid (PVC), Polyester - insbesondere Polyethylenterephthalat (PET) und Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES) oder Polyimid (PI).

Der Träger kann zudem mit organischen oder anorganischen Beschichtungen oder Schichten kombiniert sein. Dies kann durch übliche Verfahren wie zum Beispiel Lackieren, Drucken, Bedampfen, Sputtern, Co-Extrusion oder Lamination geschehen. Beispielhaft, aber nicht einschränkend erwähnt seien hier etwa Oxide oder Nitride des Siliziums und des Aluminiums, Indium-Zinn-Oxid (ITO) oder Sol-Gel-Beschichtungen.

Bei doppelseitig (selbst)klebenden Klebebändern können als obere und untere Schicht erfindungsgemäße Klebemassen gleicher oder verschiedener Art und/oder gleicher oder verschiedener Schichtdicke zur Anwendung kommen. Der Träger kann dabei auf einer oder beiden Seiten dem Stand der Technik entsprechend vorbehandelt sein, so dass beispielsweise eine Verbesserung der Klebemassenverankerung erzielt wird. Ebenso können eine oder beide Seiten mit einer funktionalen Schicht ausgerüstet sein, die beispielsweise als Sperrschicht fungieren kann. Die Haftklebemasseschichten können optional mit Trennpapieren oder Trennfolien eingedeckt werden. Alternativ kann auch nur eine Klebemasseschicht mit einem doppelseitig trennenden Liner eingedeckt sein. In einer Variante ist in dem doppelseitig (selbst)klebenden Klebeband eine erfindungsgemäße Klebemasse vorgesehen sowie eine beliebige weitere, zum Beispiel eine solche, die besonders gut auf einem Abdecksubstrat haftet oder eine besonders gute Repositionierbarkeit zeigt.

Gegenstand der Erfindung ist gleichfalls ein Verfahren zur Herstellung einer Klebemasse, insbesondere einer temperaturstabilen Haftklebemasse, sowie einer Klebemasse erhältlich nach dem Verfahren, insbesondere einer temperaturstabilen Klebemasse, indem
(i) Blockcopolymere sowie Mischungen dieser, mit einem Aufbau A-B-A, (A-B)ₙ, (A-B)ₙX oder (A-B-A)ₙX, wobei X der Rest eines Kopplungsreagenzes ist, n eine ganze Zahl zwischen 2 und 10, A ein Polymerblock aus einem Vinylaromaten und B ein Polymerblock aus einem Alken oder Dien, und zumindest ein Teil der A-Blöcke sulfoniert ist, und optional als Zumischkomponente Zweiblockcopolymere der Form A-B und
(ii) mindestens ein Klebharz und
(iii) mindestens ein Metallkomplex mit einem substituierbaren Komplexbildner vermengt werden.

In einer bevorzugten Verfahrensvariante weist das Blockcopolymer A-Blöcke, abgeleitet aus Vinylaromaten und B-Blöcke, abgeleitet aus Alkenen und Diene ausgewählt aus linearen oder verzweigten Alkenen mit 2 bis 8 C-Atomen auf, wobei B-Blöcke zumindest teilweise, bevorzugt vollständig hydriert sind, und wobei die Aromaten der A-Blöcke zumindest teilweise sulfoniert werden. Als vollständig hydriert gilt ein Polymer, wenn der Gehalt an Doppelbindungen kleiner 5 Mol-% in Bezug auf Mol-% eingesetzte Monomere beträgt.

Ebenso ist Gegenstand der Erfindung die Verwendung einer erfindungsgemäßen Klebemasse sowie das Verfahrenserzeugnis vorgenannten Verfahrens, bei dem die Klebemasse vor einer Applikation teilvernetzt wird oder nach einer Applikation teil- oder endvernetzt wird, insbesondere durch Erwärmen der Klebemasse und/oder des Elementes vor, während oder nach der Applikation der Klebemasse auf dem Element. Zudem ist auch die Verwendung einer erfindungsgemäßen Klebemasse oder eines mit der Klebemasse gebildeten ein- oder doppelseitig klebenden Klebebandes Gegenstand der Erfindung, insbesondere in Form eines temperaturstabilen Klebeverbunds, insbesondere mit einem SAFT-Wert größer gleich 180 °C, insbesondere größer gleich 200 °C.

Weitere Einzelheiten, Ziele, Merkmale und Vorteile der vorliegenden Erfindung werden nachfolgend anhand mehrerer, bevorzugte Ausführungsbeispiele darstellende Figuren näher erläutert. Es zeigen
- Fig. 1: eine erste (opto-)elektronische Anordnung in schematischer Darstellung,
- Fig. 2: eine zweite (opto-)elektronische Anordnung in schematischer Darstellung,
- Fig. 3: eine dritte (opto-)elektronische Anordnung in schematischer Darstellung.

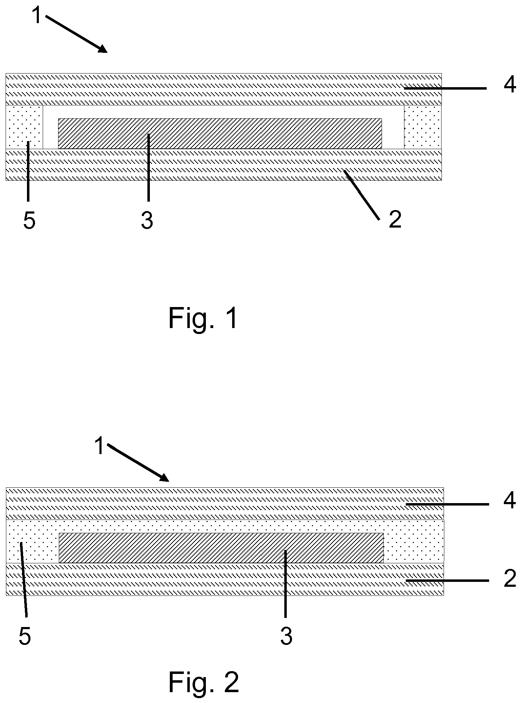

Fig. 1 zeigt eine erste Ausgestaltung einer (opto-)elektronischen Anordnung 1. Diese Anordnung 1 weist ein Substrat 2 auf, auf dem eine elektronische Struktur 3 angeordnet ist. Das Substrat 2 selbst ist als Barriere für Permeanten ausgebildet und bildet damit einen Teil der Kapselung der elektronischen Struktur 3. Oberhalb der elektronischen Struktur 3, vorliegend auch räumlich von dieser beabstandet, ist eine weitere als Barriere ausgebildete Abdeckung 4 angeordnet.

Um die elektronische Struktur 3 auch zur Seite hin zu kapseln und gleichzeitig die Abdeckung 4 mit der elektronischen Anordnung 1 im Übrigen zu verbinden, ist eine Haftklebemasse 5 umlaufend neben der elektronischen Struktur 3 auf dem Substrat 2 vorgesehen. In anderen Ausführungsformen erfolgt die Kapselung nicht mit einer reinen Haftklebemasse 5, sondern mit einem Klebeband 5, das zumindest eine erfindungsgemäße Haftklebemasse enthält. Die Haftklebemasse 5 verbindet die Abdeckung 4 mit dem Substrat 2. Durch eine entsprechend dicke Ausgestaltung ermöglicht die Haftklebemasse 5 zudem die Beabstandung der Abdeckung 4 von der elektronischen Struktur 3.

Bei der Haftklebemasse 5 handelt es sich um eine solche auf Basis der erfindungsgemäßen Haftklebemasse, wie sie vorstehend in allgemeiner Form beschrieben wurde und nachfolgend in Ausführungsbeispielen näher dargelegt ist. Die Haftklebemasse 5 übernimmt vorliegend nicht nur die Funktion des Verbindens des Substrats 2 mit der Abdeckung 4, sondern bildet zudem auch eine Barriereschicht für Permeantent, um so die elektronische Struktur 3 auch von der Seite gegen Permeanten wie Wasserdampf und Sauerstoff zu kapseln.

Die Haftklebemasse 5 wird vorliegend zudem in Form eines Stanzlings aus einem doppelseitigen Klebebandes bereitgestellt. Ein derartiger Stanzling ermöglicht eine besonders einfache Applikation.

Fig. 2 zeigt eine alternative Ausgestaltung einer (opto-)elektronischen Anordnung 1. Gezeigt ist wiederum eine elektronische Struktur 3, die auf einem Substrat 2 angeordnet und durch das Substrat 2 von unten gekapselt ist. Oberhalb und seitlich von der elektronischen Struktur ist nun die Haftklebemasse 5 vollflächig angeordnet. Die elektronische Struktur 3 wird somit von oben vollständig durch die Haftklebemasse 5 gekapselt. Auf die Haftklebemasse 5 ist sodann eine Abdeckung 4 aufgebracht. Diese Abdeckung 4 muss im Gegensatz zu der vorherigen Ausgestaltung nicht zwingend die hohen Barriereanforderungen erfüllen, da die Barriere bereits durch die Haftklebemasse bereitgestellt wird. Die Abdeckung 4 kann beispielsweise lediglich eine mechanische Schutzfunktion wahrnehmen, sie kann aber auch zusätzlich als Permeationsbarriere vorgesehen sein.

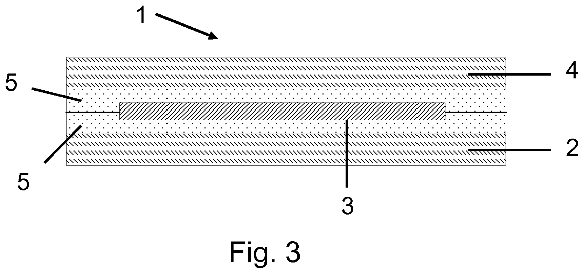

Fig. 3 zeigt eine weitere alternative Ausgestaltung einer (opto-)elektronischen Anordnung 1. Im Gegensatz zu den vorherigen Ausgestaltungen sind nun zwei Haftklebemassen 5a, 5b vorgesehen, die vorliegend identisch ausgebildet sind. Die erste Haftklebemasse 5a ist vollflächig auf dem Substrat 2 angeordnet. Auf der Haftklebemasse 5a ist die elektronische Struktur 3 vorgesehen, die durch die Haftklebemasse 5a fixiert wird. Der Verbund aus Haftklebemasse 5a und elektronischer Struktur 3 wird dann mit der weiteren Haftklebemasse 5b vollflächig überdeckt, so dass die elektronische Struktur 3 von allen Seiten durch die Haftklebemassen 5a, b gekapselt ist. Oberhalb der Haftklebemasse 5b ist wiederum die Abdeckung 4 vorgesehen.

In dieser Ausgestaltung müssen somit weder das Substrat 2 noch die Abdeckung 4 zwingend Barriereeigenschaften aufweisen. Sie können aber dennoch vorgesehen sein, um die Permeation von Permeanten zur elektronischen Struktur 3 weiter einzuschränken.

Insbesondere im Hinblick auf die Fig. 2, 3 wird darauf hingewiesen, dass es sich vorliegend um schematische Darstellungen handelt. Aus den Darstellungen ist insbesondere nicht ersichtlich, dass die Haftklebemasse 5 hier und vorzugsweise jeweils mit einer homogenen Schichtdicke aufgetragen wird. Am Übergang zur elektronischen Struktur bildet sich daher keine scharfe Kante, wie es in der Darstellung scheint, sondern der Übergang ist fließend und es können vielmehr kleine un- oder gasgefüllte Bereiche verbleiben. Gegebenenfalls kann jedoch auch eine Anpassung an den Untergrund erfolgen, insbesondere dann, wenn die Applikation unter Vakuum oder unter erhöhtem Druck durchgeführt wird. Zudem wird die Haftklebemasse lokal unterschiedlich stark komprimiert, so dass durch Fließprozesse ein gewisser Ausgleich der Höhendifferenz an den Kantenstrukturen erfolgen kann. Auch die gezeigten Dimensionen sind nicht maßstäblich, sondern dienen vielmehr nur einer besseren Darstellung. Insbesondere die elektronische Struktur selbst ist in der Regel relativ flach ausgebildet (oft weniger als 1 µm dick).

Die Applikation der Haftklebemasse 5 erfolgt in allen gezeigten Ausführungsbeispielen in Form eines Haftklebebandes. Dabei kann es sich grundsätzlich um ein doppelseitiges Haftklebeband mit einem Träger oder um ein Transferklebeband handeln. Vorliegend ist eine Ausgestaltung als Transferklebeband gewählt.

Die Dicke der Haftklebemasse, die entweder als Transferklebeband oder auf einem flächigen Gebilde beschichtet vorliegt, beträgt bevorzugt zwischen etwa 1 µm und etwa 150 µm, weiter bevorzugt zwischen etwa 5 µm und etwa 75 µm und besonders bevorzugt zwischen etwa 12 µm und 50 µm. Hohe Schichtdicken zwischen 50 µm und 150 µm werden dann eingesetzt wenn eine verbesserte Haftung auf dem Substrat und/oder eine dämpfende Wirkung innerhalb des (opto-)elektronischen Aufbaus erreicht werden soll. Nachteilig ist hier jedoch der erhöhte Permeationsquerschnitt. Geringe Schichtdicken zwischen 1 µm und 12 µm reduzieren den Permeationsquerschnitt, damit die laterale Permeation und die Gesamtdicke des (opto-)elektronischen Aufbaus. Jedoch kommt es zu einer Verringerung der Haftung auf dem Substrat. In den besonders bevorzugten Dickenbereichen liegt ein guter Kompromiss zwischen einer geringen Massendicke und dem daraus folgenden niedrigen Permeationsquerschnitt, der die laterale Permeation verringert, und einem genügend dicken Massefilm zur Herstellung einer ausreichend haftenden Verbindung. Die optimale Dicke hängt vom (opto-)elektronischen Aufbau, der Endanwendung, der Art der Ausführung der Haftklebemasse und gegebenenfalls dem flächigen Substrat ab.

Für doppelseitige Klebebänder gilt für die Barriereklebemasse(n) ebenfalls, dass die Dicke der einzelnen Haftklebemasseschicht(en) bevorzugt zwischen etwa 1 µm und etwa 150 µm, weiter bevorzugt zwischen etwa 5 µm und etwa 75 µm und besonders bevorzugt zwischen etwa 12 µm und 50 µm liegt. Kommt in doppelseitigen Klebebändern neben der einen erfindungsgemäßen Barriereklebemasse eine weitere zum Einsatz, dann kann es auch vorteilhaft sein, wenn ihre Dicke oberhalb 150 µm liegt.

Im Folgenden wird die Erfindung durch einige Beispiele näher erläutert, ohne die Erfindung damit einschränken zu wollen.

### Prüfmethoden

**Glasübergangspunkt (T_{g})** - Die Bestimmung des Glasübergangspunkts (T_{g}) von Polymeren und Copolymeren kann über Dynamische Differenz Kalorimetrie durchgeführt werden, so wie sie in DIN 53765 beschrieben wird. Hierzu werden 7 mg der Probe in einen Aluminiumtiegel genau eingewogen und anschließend in das Messgerät (Gerät: DSC 204 F1, Firma Netzsch) eingebracht. Als Referenz wird ein leerer Tiegel benutzt. Anschließend werden zwei Aufheizkurven mit einer Aufheizrate von 10 K/min aufgenommen. Der T_{g} wird aus der zweiten Aufheizkurve ermittelt. Die Auswertung erfolgt über die Gerätesoftware.

**Klebkraft** - Die Bestimmung der Klebkraft wurde wie folgt durchgeführt: Als definierter Haftgrund wurden Glasplatten (Floatglas) eingesetzt. Das zu untersuchende verklebbare Flächenelement wurde auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wurde das zuvor verklebte Flächenelement in einem Winkel von 180° bei Raumtemperatur und mit 300 mm/min vom Haftgrund mit einem Zugprüfungsgerät (Firma Zwick) abgezogen und die hierfür benötigte Kraft gemessen. Der Messwert (in N/cm) ergab sich als Mittelwert aus drei Einzelmessungen. Die Prüfung erfolgte an unvernetzten Mustern.

**Shear Adhesion Failure Temperature (SAFT)** - Die Bestimmung der SAFT wurde wie folgt durchgeführt: Als definierter Haftgrund wurde eine polierte Stahlfläche eingesetzt. Das zu untersuchende verklebbare Flächenelement wurde auf eine Breite von 10 mm und eine Länge von etwa 5 cm zugeschnitten und unmittelbar danach dreimal mit einer Stahlrolle von 2 kg bei einem Vorschub von 10 m/min auf den jeweils gewählten Haftgrund mit einer Fläche von 10 x 13 mm aufgedrückt. Unmittelbar im Anschluss daran wurde das zuvor verklebte Flächenelement in einem Winkel von 180° mit 0,5 N belastet und eine Temperaturrampe von 9°C/min gefahren. Dabei wurde die Temperatur gemessen, bei der die Probe eine Rutschstrecke von 1 mm zurückgelegt hat. Der Messwert (in °C) ergibt sich als Mittelwert aus zwei Einzelmessungen.

**Molekulargewicht** - Die Bestimmung des mittleren Molekulargewichtes Mw (Gewichtsmittel) erfolgt mittels Gelpermeationschromatographie (GPC). Als Eluent wird THF mit 0,1 Vol.-% Trifluoressigsäure eingesetzt. Die Messung erfolgt bei 25 °C. Als Vorsäule wird PSS-SDV, 5 µm, 10³ Å, ID 8,0 mm x 50 mm verwendet. Zur Auftrennung wurden die Säulen PSS-SDV, 5 µm, 10³ Å, 10⁵ Å und 10⁶ Å mit jeweils ID 8,0 mm × 300 mm eingesetzt. Die Probenkonzentration beträgt 4 g/l, die Durchflussmenge 1,0 ml pro Minute. Es wird gegen PS-Standards gemessen.

### Beispiele:

### Allgemeine Herstellbeispiele Sulfonierung:

Nachfolgend werden allgemeine Beispiele für mögliche Sulfonierungsverfahren dargestellt:
a) Es wird eine 10 % (w/v) Lösung von SIBS (50 g) in Methylenchlorid (500 ml) hergestellt. Die Lösung wird gerührt und unter Rückfluss in Stickstoffatmosphäre auf etwa 40 °C erwärmt. Acetylsulfat als Sulfonierungsagenz wird in Methylenchlorid hergestellt. Hierzu werden 150 ml Methylenchlorid in einem Eis-Bad vorbereitet. Anschließend wird entsprechend des gewünschten Sulfonierungsgrades Essigsäureanhydrid vorgelegt. Das Essigsäureanhydrid wird mit einem 1,5:1-molaren Verhältnis zur konzentrierten Schwefelsäure im Überschuss hinzugefügt. Die konzentrierte Schwefelsäure wird anschließend langsam über einen Tropftrichter unter Rühren zugegeben. Die Mischung wird dann ca. 10 Minuten homogenisiert. Hierbei darf keine Färbung auftreten. Die Acetylsulfat-Lösung wird dann ihrerseits in einen Tropftrichter umgefüllt und während 10 bis 30 Minuten langsam zur warmen Polymerlösung hinzugetropft. Nach ca. 5 h beendet man die Reaktion durch langsame Zugabe von 100 ml Methanol. Die umgesetzte Polymerlösung wird dann in deionisiertem Wasser ausgefällt. Der Niederschlag wird mehrmals mit Wasser gewaschen und anschließend in einem Vakuumofen bei 50°C für 24 h getrocknet.
b) Aus der US 3,642,953 A ist das nachfolgende Verfahren abgeleitet: SIBS als Block-Polymer mit mittleren Block-Molekulargewichten 10,000-127,000-10, 000 (14,3 g) wurde in trockenem Diethylether gelöst (1.000 g), gefiltert und auf 0 °C gekühlt. Zur Polymerlösung wurde langsam eine Mischung aus 8,8 g Chlorsulfonsäure, aufgenommen in 100 g trockenem Diethylether, hinzugefügt. Die Reaktionstemperatur wurde bei 0 °C bis 5 °C für 30 Minuten gehalten. Dabei fällt das Fblymer aus der Lösung aus und Chlorwasserstoff entsteht. Am Ende der Reaktionszeit wurde das Gemisch auf Raumtemperatur erwärmt, der Ether wurde aus dem Produkt dekantiert und das ausgefällte Produkt wurde dreimal mit Ether gewaschen. Die beiden vorgenannten Verfahren sind gegebenenfalls mit Modifikation grundsätzlich auf alle erfindungsgemäßen Sulfonierungen anwendbar. Gegenstand der Erfindung sind auch Copolymere umfassend sulfonierte Copolymere erhältlich nach den vorgenannten Verfahren im Gemische mit unsulfonierten Copolymeren.

**Herstellung der Muster** - Die Haftklebemassen in Beispiel 1 bis 3 wurden aus Lösung hergestellt. Dazu wurden die einzelnen Bestandteile in THF/Toluol/Methanol 80/10/10 gelöst (Feststoffanteil 40%) und auf eine unbehandelte 23µm PET-Folie beschichtet und bei 120 °C 15 Minuten lang getrocknet, so dass eine Klebemasseschicht mit einem Flächengewicht von 50 g/m² entstand.

**Beispiel 1:** Es wird eine 10 % (w/v) Lösung von SIBS Sibstar 103T (50 g) in Methylenchlorid (500 ml) hergestellt. Die Lösung wird gerührt und unter Rückfluss in Stickstoffatmosphäre auf etwa 40°C erwärmt. Acetylsulfat als Sulfonierungsagenz wird in Methylenchlorid hergestellt. Hierzu werden 150 ml Methylenchlorid in einem Eis-Bad vorbereitet. Anschließend wird entsprechend 2,57 g Essigsäureanhydrid vorgelegt. Das Essigsäureanhydrid wird zur konzentrierten Schwelsäure im Überschuss hinzugefügt. 1,41 g der konzentrierten Schwefelsäure wird anschließend langsam über einen Tropftrichter unter Rühren zugegeben. Die Mischung wird dann ca. 10 Minuten homogenisiert. Hierbei darf keine Färbung auftreten. Die Acetylsulfat-Lösung wird dann während 10 bis 30 Minuten langsam zur warmen Polymerlösung hinzu getropft. Nach ca. 5 h beendet man die Reaktion durch langsame Zugabe von 100 ml Methanol. Die umgesetzte Polymerlösung wird dann in kaltem Methanol ausgefällt. Der Niederschlag wird mehrmals mit Methanol und Wasser gewaschen und anschließend in einem Vakuumofen bei 80 °C für 24 h getrocknet. Der Sulfansäureanteil eines so hergestellten Polymers liegt bei ∼7 Mol-%.

### Masse - Beispiel 1

| | | |
|---|---|---|
| 70 Teile | Kraton G 1650 | Triblock-SEBS (Styrol-Ethylen-Butylen-Styrol) mit 30 Gew.-% Blockpolystyrolgehalt der Firma Kraton sulfoniert 12 Mol-% |
| 30 Teile | Kraton G 1657 | SEBS mit 13 Mol-% Blockpolystyrolgehalt und einem Zweiblockanteil von 29% der Firma Kraton |
| 130 Teile | Regalite 1100 | Hydriertes KW-Harz mit einem Erweichungspunkt von 100 °C der Firma Eastman |
| 30 Teile | Regalite R1010 | Flüssiges hydriertes Kohlenwasserstoffharz der Firma Eastman |
| 2 Teile | | Aluminiumacetylacetonat |
| 2 Teile | | Pentandion |

### Beispiel 2

| | | |
|---|---|---|
| 50 Teile | Kraton G1652 | SEBS (Styrol-Ethylen-Butylen-Styrol) mit 30 Gew.-% Blockpolystyrolgehalt der Firma Kraton sulfoniert 7 Mol-% |
| 50 Teile | Kraton G1657 | SEBS mit 13 Mol-% Blockpolystyrolgehalt der Firma Kraton und einem Diblockanteil von 29 % sulfoniert zu 9 Mol-% |
| 130 Teile | Escorez 5600 | Hydriertes KW-Harz mit einem Erweichungspunkt von 100 °C der Firma Exxon |
| 25 Teile | Ondina G 49 | Weißöl aus parafinischen und naphtenischen Anteilen der Firma Shell |
| 2 Teile | | Aluminiumacetylacetonat |
| 2 Teile | | Pentandion |

### Beispiel 3

| | | |
|---|---|---|
| 50 Teile | Septon 4033 | Triblock SEEPS mit 30 Gew.-% Blockpolystyrolgehalt der Firma Kuraray sulfoniert mit 7 Mol% |
| 50 Teile | Septon 2063 | Triblock SEPS mit 13 Gew.-% Blockpolystyrolgehalt der Firma Kuraray |
| 120 Teile | Foralyn 90 | Hydriertes Kolophoniumharz mit einem Erweichungspunkt von 90 °C der Firma Eastman |
| 1 Teil | | Aluminiumacetonat |
| 1 Teil | | Pentandion |

### Masse - Vergleichsbeispiel 1

| | | |
|---|---|---|
| 70 Teile | Kraton G 1650 | Triblock-SEBS (Styrol-Ethylen-Butylen-Styrol) mit 30 Gew.-% Blockpolystyrolgehalt der Fa Kraton |
| 30 Teile | Kraton G 1657 | SEBS mit 13 Mol-% Blockpolystyrolgehalt und einem Zweiblockanteil von 29% der Firma Kraton |
| 130 Teile | Regalite 1100 | Hydriertes KW-Harz mit einem Erweichungspunkt von 100°C der Firma Eastman |
| 30 Teile | Regalite R1010 | Flüssiges hydriertes Kohlenwasserstoffharz der Firma Eastman |

### Vergleichsbeispiel 2

| | | |
|---|---|---|
| 50 Teile | Septon 4033 | Triblock SEEPS (Styrol-Ethylen/(Ethylen-Propylen)-Styrol) mit 30 Gew.-% Blockpolystyrolgehalt der Firma Kuraray |
| 50 Teile | Septon 2063 | Triblock SEPS mit 13 Gew.-% Blockpolystyrolgehalt und 60% Zweiblockanteil der Firma Kuraray |
| 120 Teile | Foralyn 90 | Hydriertes Kolophoniumharz mit einem Erweichungspunkt von 90 °C der Firma Eastman |
| 1 Teil | | Aluminiumacetonat |

**Tabelle 1: Ausprüfung der Beispiele**

| | **Klebkraft** | **SAFT** |
|---|---|---|
| Beispiel 1 | 5,5 | 210 |
| Beispiel 2 | 5,9 | 210 |
| Beispiel 3 | 4,7 | 210 |
| Vergleichsbeispiel 1 | 4,8 | 120 |
| Vergleichsbeispiel 2 | 5,2 | 100 |

Wie in der vorstehenden Tabelle zu sehen ist, nehmen die Haftung der sulfonierten Klebemasse auf polaren Untergründen und die Temperaturscherfestigkeit zu. Die Messung wurde bei 210 °C beendet, da dies das Maxirrum der Temperiereinheit darstellt. Im Gegensatz dazu zeigen die unvernetzten Systeme das für Styrolblockcopolymer typische Temperaturversagen zwischen 100 °C bis 120 °C, welches sich durch das Erweichen der Styroldomänen ergibt. Wie zu erkennen ist, konnten in allen Beispielen auf allen Untergründen ausreichende Klebkräfte und bei den Beispielen 1, 2 und 3 exzellente Beständigkeit bei erhöhten Temperaturen erreicht werden.

## Patentansprüche

1. Klebemasse **dadurch gekennzeichnet, dass** die Klebemasse umfasst
(i) Blockcopolymere sowie Mischungen dieser, mit einem Aufbau A-B-A, (A-B)ₙ, (A-B)ₙX oder (A-B-A)ₙX, wobei X der Rest eines Kopplungsreagenzes ist, n eine ganze Zahl zwischen 2 und 10, A ein Polymerblock aus einem Vinylaromaten und B ein Polymerblock aus einem Alken oder Dien, und zumindest ein Teil der A-Blöcke sulfoniert ist, und
(ii) mindestens ein Klebharz und
(iii) mindestens einen Metallkomplex mit einem substituierbaren Komplexbildner.

2. Klebemasse nach Anspruch 1, **dadurch gekennzeichnet, dass** die Polymerblöcke B zumindest teilweise hydriert sind.

3. Klebemasse nach Anspruch 1 oder 2, **dadurch gekennzeichnet, dass** (i) zumindest ein Teil der Blockcopolymere als sulfonierte Copolymere mit sulfonierten A-Blöcken vorliegen, mit chelatvernetzten A-Blöcken.

4. Klebemasse nach einem der Ansprüche 1 bis 3, **dadurch gekennzeichnet, dass** (i) die A-Blöcke jeweils unabhängig einen T_{g} größer 40 °C und die B-Blöcke jeweils unabhängig einen T_{g} kleiner 0 °C aufweisen, jeweils bestimmt wie im Prüfmethodenteil der Beschreibung angegeben.

5. Klebemasse nach einem der Ansprüche 1 bis 4, **dadurch gekennzeichnet, dass** die B-Blöcke unabhängig ein Homo- oder Copolymer aus Monomeren Alkenen mit 2 bis 8 C-Atomen sind.

6. Klebemasse nach einem der Ansprüche 1 bis 5, **dadurch gekennzeichnet, dass** die Blockcopolymere eine Molmasse M_{w} (Gewichtsmittel) von kleiner gleich 300.000 g/mol aufweisen, bestimmt wie im Prüfmethodenteil der Beschreibung angegeben.

7. Klebemasse nach einem der Ansprüche 1 bis 6, **dadurch gekennzeichnet, dass** die A-Blöcke ein Homo- oder Copolymer aus Monomeren ausgewählt aus Vinylaromaten und Derivaten von Vinylaromaten sind.

8. Klebemasse nach einem der Ansprüche 1 bis 7, **dadurch gekennzeichnet, dass** der Metallkomplex mit einem substituierbaren Komplexbildner einem Metallchelat der Formel I entspricht,
(R¹O)ₙ M (XR²Y)ₘ (I)
wobei M ein Metall ausgewählt ist aus Metallen der 2. 3. 4. und 5. Hauptgruppe des Periodensystems und den Übergangsmetallen, und
R¹ eine Alkyl- oder Aryl-Gruppe ist;
n gleich 0 oder eine größere ganze Zahl ist,
X und Y im Chelat-Ligand (XR²Y) unabhängig Sauerstoff oder Stickstoff sind,
R² eine X und Y verbindende Alkylen-Gruppe ist, die linear oder verzweigt ist;
m eine ganze Zahl ist, mindestens jedoch 1.

9. Klebemasse nach Anspruch 8, **dadurch gekennzeichnet, dass** der Chelat-Ligand im Metallchelat aus der Reaktion mindestens einer der Verbindungen ausgewählt aus Triethanolamin, 2,4-Pentandion, 2-Ethyl-1,3-Hexandiol oder Milchsäure gebildet wird.

10. Klebemasse nach einem der Ansprüche 1 bis 9, **dadurch gekennzeichnet, dass** das sulfonierte Copolymer sulfonierte A-Blöcke aufweist, deren Aromaten zu größer gleich 0,5 Mol-% je Mol der Monomereinheit bezogen auf die Gesamtmonomereinheiten der A-Blöcke der sulfonierten Copolymere sulfoniert sind.

11. Klebemasse nach einem der Ansprüche 1 bis 10, **dadurch gekennzeichnet, dass** das sulfonierte Copolymer sulfonierte A-Blöcke aufweist, deren Aromaten zu größer gleich 0,5 bis 50 Mol-% je Mol der Monomereinheit bezogen auf die Gesamtmonomereinheiten der A-Blöcke der sulfonierten Copolymere sulfoniert sind.

12. Klebemasse nach einem der Ansprüche 1 bis 11, **dadurch gekennzeichnet, dass** (ii) zu 10 bis 60 Gew.-% mindestens ein Klebharz, und
(iii) mindestens ein Metallkomplex mit einem substituierbaren Komplexbildner und
(iv) bis zu 20 Gew.-% ein Weichmacher und
(v) 0,0 bis 20 Gew.-% Füllstoffe, Additive, und
(i) das Blockcopolymer sowie Mischungen dieser ad 100 Gew.-% in der Gesamtzusammensetzung der Klebemasse enthalten sind.

13. Klebemasse nach einem der Ansprüche 6 bis 12, **dadurch gekennzeichnet, dass** der Anteil in Gew.-% der Vinylaromaten der A-Blöcke im (i) Blockcopolymer in Bezug auf die Gesamtzusammensetzung der Klebemasse mindestens 13 bis 85 Gew.-% beträgt.

14. Klebemasse nach einem der Ansprüche 1 bis 13 **dadurch gekennzeichnet, dass** das molare Verhältnis der Sulfonsäuregruppen im (i) sulfonierten Copolymer zum Liganden (XR²Y) im (iii) Metallkomplex der Formel I im Bereich von 1 : 3 bis 3 : 1 liegt.

15. Klebemasse nach einem der Ansprüche 1 bis 14 **dadurch gekennzeichnet, dass** sie einen SAFT-Wert größer gleich 150 °C aufweist, bestimmt wie im Prüfmethodenteil der Beschreibung angegeben.

16. Verfahren zur Herstellung einer Klebemasse, indem
(i) Blockcopolymere sowie Mischungen dieser mit einem Aufbau A-B-A, (A-B)ₙ, (A-B)ₙX oder (A-B-A)ₙX, wobei X der Rest eines Kopplungsreagenzes ist, n eine ganze Zahl zwischen 2 und 10, A ein Polymerblock aus einem Vinylaromaten und B ein Polymerblock aus einem Alken oder Dien, und zumindest ein Teil der A-Blöcke sulfoniert ist, und
(ii) mindestens ein Klebharz und
(iii) mindestens ein Metallkomplex mit einem substituierbaren Komplexbildner vermengt werden.

17. Verfahren nach Anspruch 16, **dadurch gekennzeichnet, dass** ferner als Zumischkomponente Zweiblockcopolymere der Form A-B mit vermengt werden.

18. Verfahren nach Anspruch 16 oder 17, **dadurch gekennzeichnet, dass** die Blockcopolymere A-Blöcke, abgeleitet aus Vinylaromaten und B-Blöcke, abgeleitet aus linearen oder verzweigten Alkenen mit 2 bis 8 C-Atomen umfassen, wobei die B-Blöcke zumindest teilweise hydriert sind, und wobei die Aromaten der A-Blöcke zumindest teilweise sulfoniert werden.

19. Klebemasse erhältlich nach einem Verfahren nach einem der Ansprüche 16 bis 18.

20. Verwendung einer Klebemasse nach einem der Ansprüche 1 bis 15 oder 19, sowie des Verfahrenserzeugnisses nach einem der Ansprüche 16 bis 18, oder eines mit der Klebemasse gebildeten ein- oder doppelseitig klebenden Klebebandes als temperaturstabiler Klebeverbund.

21. Flächiges Haftmittel umfassend die Klebemasse nach einem der Ansprüche 1 bis 15, 19 sowie eines Verfahrensproduktes nach einem der Ansprüche 16 bis 18, wobei das flächige Haftmittel ausgewählt ist aus einem Flächenelement der Klebemasse und einem Klebeband, wobei das Klebeband einen Träger und auf mindestens einer Seite des Trägers die aufgebrachte Klebemasse aufweist, und die Klebemasse des flächigen Haftmittels im Wesentlichen getrocknet ist.

## Claims

1. Adhesive, **characterized in that** the adhesive comprises
(i) block copolymers and also mixtures thereof, having a construction A-B-A, (A-B)ₙ, (A-B)ₙX, or (A-B-A)ₙX, where X is the radical of a coupling reagent, n is an integer between 2 and 10, A is a polymer block of a vinylaromatic, and B is a polymer block of an alkene or diene, and at least some of the A blocks are sulfonated, and
(ii) at least one tackifier resin, and
(iii) at least one metal complex with a substitutable complexing agent.

2. Adhesive according to Claim 1, **characterized in that** the polymer blocks B are at least partly hydrogenated.

3. Adhesive according to Claim 1 or 2, **characterized in that** (i) at least some of the block copolymers are in the form of sulfonated copolymers having sulfonated A blocks, having chelate-crosslinked A blocks.

4. Adhesive according to any of Claims 1 to 3, **characterized in that** (i) the A blocks each independently have a T_{g} of more than 40°C and the B blocks each independently have a T_{g} of less than 0°C, in each case determined as stated in the Test methods part of the description.

5. Adhesive according to any of Claims 1 to 4, **characterized in that** the B blocks independently are a homopolymer or copolymer of monomeric alkenes having 2 to 8 C atoms.

6. Adhesive according to any of Claims 1 to 5, **characterized in that** the block copolymers have a molar mass M_{w} (weight average) of less than or equal to 300 000 g/mol, determined as stated in the Test methods part of the description.

7. Adhesive according to any of Claims 1 to 6, **characterized in that** the A blocks are a homopolymer or copolymer of monomers selected from vinylaromatics and derivatives of vinylaromatics.

8. Adhesive according to any of Claims 1 to 7, **characterized in that** the metal complex with a substitutable complexing agent corresponds to a metal chelate of the formula I,
(R¹O)ₙ M (XR²Y)ₘ (I)
where M is a metal selected from metals from main groups 2, 3, 4, and 5 of the Periodic Table and from the transition metals, and
R¹ is an alkyl or aryl group;
n is 0 or a larger integer,
X and Y in the chelate ligand (XR²Y) are independently oxygen or nitrogen,
R² is an alkylene group which joins X and Y and which is linear or branched;
m is an integer, but is at least 1.

9. Adhesive according to Claim 8, **characterized in that** the chelate ligand in the metal chelate is formed from the reaction of at least one of the compounds selected from triethanolamine, 2,4-pentanedione, 2-ethyl-1,3-hexanediol, or lactic acid.

10. Adhesive according to any of Claims 1 to 9, **characterized in that** the sulfonated copolymer has sulfonated A blocks in which greater than or equal to 0.5 mol% of the aromatics are sulfonated per mole of the monomer unit, based on the total monomer units of the A blocks of the sulfonated copolymers.

11. Adhesive according to any of Claims 1 to 10, **characterized in that** the sulfonated copolymer has sulfonated A blocks in which greater than or equal to 0.5 to 50 mol% of the aromatics are sulfonated per mole of the monomer unit, based on the total monomer units of the A blocks of the sulfonated copolymers.

12. Adhesive according to any of Claims 1 to 11, **characterized in that** the overall composition of the adhesive contains
(ii) at 10 to 60 wt%, at least one tackifier resin, and
(iii) at least one metal complex with a substitutable complexing agent, and
(iv) up to 20 wt% of a plasticizer, and
(v) 0.0 to 20 wt% of fillers, additives, and
(i) the block copolymer and also mixtures thereof to 100 wt%.

13. Adhesive according to any of Claims 6 to 12, **characterized in that** the fraction in wt% of the vinylaromatics of the A blocks in the (i) block copolymer in relation to the overall composition of the adhesive is at least 13 to 85 wt%.

14. Adhesive according to any of Claims 1 to 13, **characterized in that** the molar ratio of the sulfonic acid groups in the (i) sulfonated copolymer to the ligand (XR²Y) in the (iii) metal complex of the formula I is in the range from 1:3 to 3:1.

15. Adhesive according to any of Claims 1 to 14, **characterized in that** it has a SAFT value of greater than or equal to 150°C, determined as stated in the Test methods part of the description.

16. Process for producing an adhesive, by combining
(i) block copolymers and also mixtures thereof, having a construction A-B-A, (A-B)ₙ, (A-B)ₙX, or (A-B-A)ₙX, where X is the radical of a coupling reagent, n is an integer between 2 and 10, A is a polymer block of a vinylaromatic, and B is a polymer block of an alkene or diene, and at least some of the A blocks are sulfonated, and
(ii) at least one tackifier resin, and
(iii) at least one metal complex with a substitutable complexing agent.

17. Process according to Claim 16, **characterized in that** furthermore, as an admixture component, diblock copolymers of the form A-B are also combined.

18. Process according to Claim 16 or 17, **characterized in that** the block copolymers comprise A blocks derived from vinylaromatics and B blocks derived from linear or branched alkenes having 2 to 8 C atoms, the B blocks being at least partly hydrogenated, and the aromatics of the A blocks being at least partly sulfonated.

19. Adhesive obtainable by a process according to any of Claims 16 to 18.

20. Use of an adhesive according to any of Claims 1 to 15 or 19, and also of the process product according to any of Claims 16 to 18, or of a single- or double-sided adhesive tape formed with the adhesive, as a temperature-stable adhesive assembly.

21. Sheetlike bonding means comprising the adhesive according to any of Claims 1 to 15, 19 and also a process product according to any of Claims 16 to 18, the sheetlike bonding means being selected from a sheetlike element of the adhesive and an adhesive tape, the adhesive tape comprising a backing and the adhesive applied to at least one side of the backing, and the adhesive of the sheetlike bonding agent being substantially dried.

## Revendications

1. Matériau adhésif, **caractérisé en ce que** le matériau adhésif comprend :
(i) des copolymères séquencés, ainsi que des mélanges de ceux-ci, ayant une structure A-B-A, (A-B)ₙ, (A-B)ₙX ou (A-B-A)ₙX, X étant un radical d'un réactif de couplage, n étant un nombre entier compris entre 2 et 10, A étant une séquence polymère d'un composé aromatique de vinyle et B étant une séquence polymère d'un alcène ou d'un diène, et au moins une partie des séquences A étant sulfonées, et
(ii) au moins une résine adhésive, et
(iii) au moins un complexe métallique contenant un complexant pouvant être substitué.

2. Matériau adhésif selon la revendication 1, **caractérisé en ce que** les séquences polymères B sont au moins partiellement hydrogénées.

3. Matériau adhésif selon la revendication 1 ou 2, **caractérisé en ce que** (i) au moins une partie des copolymères séquencés se présentent sous la forme de copolymères sulfonés contenant des séquences A sulfonées, avec des séquences A à réticulation chélate.

4. Matériau adhésif selon l'une quelconque des revendications 1 à 3, **caractérisé en ce que** (i) les séquences A présentent chacune indépendamment une T_{g} supérieure à 40 °C et les séquences B présentent chacune indépendamment une T_{g} inférieure à 0 °C, à chaque fois déterminée tel qu'indiqué dans la partie méthodes d'essais de la description.

5. Matériau adhésif selon l'une quelconque des revendications 1 à 4, **caractérisé en ce que** les séquences B sont indépendamment un homo- ou copolymère de monomères alcènes contenant 2 à 8 atomes C.

6. Matériau adhésif selon l'une quelconque des revendications 1 à 5, **caractérisé en ce que** les copolymères séquencés présentent une masse molaire M_{w} (moyenne en poids) inférieure ou égale à 300 000 g/mol, déterminée tel qu'indiqué dans la partie méthodes d'essais de la description.

7. Matériau adhésif selon l'une quelconque des revendications 1 à 6, **caractérisé en ce que** les séquences A sont un homo- ou copolymère de monomères choisis parmi les composés aromatiques de vinyle et les dérivés de composés aromatiques de vinyle.

8. Matériau adhésif selon l'une quelconque des revendications 1 à 7, **caractérisé en ce que** le complexe métallique contenant un complexant pouvant être substitué correspond à un chélate métallique de formule I
(R¹O)ₙM(XR²Y)ₘ (I)
dans laquelle M est un métal choisi parmi les métaux des groupes principaux 2, 3, 4 et 5 du tableau périodique et les métaux de transition, et
R¹ est un groupe alkyle ou aryle ;
n représente 0 ou un nombre entier plus élevé,
X et Y dans le ligand chélate (XR²Y) sont indépendamment l'oxygène ou l'azote,
R² est un groupe alkylène reliant X et Y, qui est linéaire ou ramifié,
m est un nombre entier, valant toutefois au moins 1.

9. Matériau adhésif selon la revendication 8, **caractérisé en ce que** le ligand chélate dans le chélate métallique est formé par la réaction d'au moins un des composés choisis parmi la triéthanolamine, la 2,4-pentanedione, le 2-éthyl-1,3-hexanediol ou l'acide lactique.

10. Matériau adhésif selon l'une quelconque des revendications 1 à 9, **caractérisé en ce que** le copolymère sulfoné comprend des séquences A sulfonées, dont les composés aromatiques sont sulfonés à hauteur de 0,5 % en moles ou plus par mole de l'unité monomère par rapport aux unités monomères totales des séquences A des copolymères sulfonés.

11. Matériau adhésif selon l'une quelconque des revendications 1 à 10, **caractérisé en ce que** le copolymère sulfoné comprend des séquences A sulfonées, dont les composés aromatiques sont sulfonés à hauteur de 0,5 à 50 % en moles ou plus par mole de l'unité monomère par rapport aux unités monomères totales des séquences A des copolymères sulfonés.

12. Matériau adhésif selon l'une quelconque des revendications 1 à 11, **caractérisé en ce que**
(ii) 10 à 60 % en poids d'au moins une résine adhésive et
(iii) au moins un complexe métallique contenant un complexant pouvant être substitué, et
(iv) jusqu'à 20 % en poids d'un plastifiant et
(v) 0,0 à 20 % en poids de charges, d'additifs, et
(i) jusqu'à 100 % en poids du copolymère séquencé et de mélanges de celui-ci,
sont contenus dans la composition totale du matériau adhésif.

13. Matériau adhésif selon l'une quelconque des revendications 6 à 12, **caractérisé en ce que** la proportion en % en poids des composés aromatiques de vinyle des séquences A dans (i) le copolymère séquencé par rapport à la composition totale du matériau adhésif est d'au moins 13 à 85 % en poids.

14. Matériau adhésif selon l'une quelconque des revendications 1 à 13, **caractérisé en ce que** le rapport molaire entre les groupes acide sulfonique dans (i) le copolymère sulfoné et les ligands (XR²Y) dans (iii) le complexe métallique de formule I se situe dans la plage allant de 1:3 à 3:1.

15. Matériau adhésif selon l'une quelconque des revendications 1 à 14, **caractérisé en ce qu'**il présente une valeur SAFT supérieure ou égale à 150 °C, déterminée tel qu'indiqué dans la partie méthodes d'essais de la description.

16. Procédé de fabrication d'un matériau adhésif, selon lequel
(i) des copolymères séquencés, ainsi que des mélanges de ceux-ci, ayant une structure A-B-A, (A-B)ₙ, (A-B)ₙX ou (A-B-A)ₙX, X étant un radical d'un réactif de couplage, n étant un nombre entier compris entre 2 et 10, A étant une séquence polymère d'un composé aromatique de vinyle et B étant une séquence polymère d'un alcène ou d'un diène, et au moins une partie des séquences A étant sulfonées, et
(ii) au moins une résine adhésive, et
(iii) au moins un complexe métallique contenant un complexant pouvant être substitué,
sont mélangés.

17. Procédé selon la revendication 16, **caractérisé en ce que** des copolymères biséquencés de forme A-B sont en outre incorporés en tant que composant de mélange.

18. Procédé selon la revendication 16 ou 17, **caractérisé en ce que** les copolymères séquencés comprennent des séquences A dérivées de composés aromatiques de vinyle et des séquences B dérivées d'alcènes linéaires ou ramifiés de 2 à 8 atomes C, les séquences B étant au moins partiellement hydrogénées et les composés aromatiques des séquences A étant au moins partiellement sulfonés.

19. Matériau adhésif pouvant être obtenu par un procédé selon l'une quelconque des revendications 16 à 18.

20. Utilisation d'un matériau adhésif selon l'une quelconque des revendications 1 à 15 ou 19, ainsi que du produit du procédé selon l'une quelconque des revendications 16 à 18, ou d'une bande adhésive simple ou double face formée avec le matériau adhésif en tant que composite adhésif stable à la température.

21. Agent adhésif plat comprenant le matériau adhésif selon l'une quelconque des revendications 1 à 15, 19, ainsi qu'un produit du procédé selon l'une quelconque des revendications 16 à 18, l'agent adhésif plat étant choisi parmi un élément plat du matériau adhésif et une bande adhésive, la bande adhésive comprenant un support et le matériau adhésif appliqué sur au moins un côté du support, et le matériau adhésif de l'agent adhésif plat étant essentiellement séché.
